# DEMANDE DE BREVET EUROPEEN

(11) **EP 1 970 327 A1**
(43) Date de publication de la demande: **17.09.2008**
(21) Numéro de dépôt: 08102526.4
(22) Date de dépôt: 12.03.2008
(51) Int. Cl.: B65G 1/127, A47B 51/00

(54) **Dispositif de stockage et d'acheminement d'articles**

(30) Priorité: 12.03.2007 FR 0753761
(71) Demandeur: JGP Ingenierie, 59110 La Madeleine (FR)
(72) Inventeur: PRIEUR, Jean Gabriel, 59110, LA MADELEINE (FR)
(74) Mandataire: Hennion, Jean-Claude

(57) **Abrégé**

L'invention concerne un dispositif (1) de stockage et d'acheminement d'articles, notamment utilisable en tant que mobilier de rangement d'articles à usage domestique, comprenant au moins trois cellules (3) de stockage mobiles à l'intérieur dudit dispositif (1), des moyens de déplacement (25,31,47) des cellules permettant d'acheminer l'une desdites cellules (3), sélectionnée par un utilisateur, dans une zone d'accès (7).

Le dispositif comprend un volume interne (5) découpé en au moins quatre compartiments (9,11) dont au moins l'un d'entre eux communique avec la zone d'accès (7), ces compartiments (9) étant occupés par les cellules (3) à l'exception d'au moins l'un (11) d'entre eux qui reste inoccupé, la position dudit compartiment inoccupé (11) changeant lors du déplacement des cellules (3), lesdits moyens de déplacement (25,31,47) étant agencés pour gérer la translation des cellules (3) au travers des compartiments (9) en transitant par le compartiment inoccupé (11) afin d'amener la cellule (3) sélectionnée dans le compartiment communiquant avec la zone d'accès (7).

## Description

La présente invention est relative à un dispositif de stockage et d'acheminement d'articles. Elle pourra notamment être mise en oeuvre par des fabricants de mobilier et également par des fabricants de systèmes automatisés. Elle trouvera par exemple son application en tant que mobilier de rangement d'articles pour un usage domestique, et sera aménagée chez des personnes à mobilité réduite ou à déficience visuelle pour faciliter l'appréhension des articles stockés dans le meuble. On pourra également envisager son utilisation dans d'autres domaines, comme par exemple dans le commerce pour le rangement des produits pharmaceutiques, ou encore dans l'industrie pour le stockage de pièces entrant dans la fabrication de produits, ou d'outillage nécessaires à la conception des produits.

Les dispositifs de stockage et de rangement se composent de manière générale d'une structure servant de châssis ou de bâti qui définit un volume à l'intérieur duquel sont agencées des cellules pour le rangement des produits à stocker. Ces cellules sont mobiles à l'intérieur du dispositif, des moyens de déplacement, constitués par exemple de plateaux tournants à axe vertical ou à axe horizontal actionnés par une motorisation ou un système de transmission à chaîne, permettant d'amener l'une des cellules qui a été sélectionnée au niveau d'une zone d'accès, dans laquelle il est possible d'accéder aux produits stockés à l'intérieur de ladite cellule.

Il est connu par exemple les demandes de brevet WO 97/37564, WO 99/62377, EP 1.061.013, EP 0.254.088.

Les demandes de brevet européen EP 1.061.013 et EP 0.254.088 divulguent respectivement une étagère de stockage et un dispositif de sécurité pour armoire mécanique.

Le document EP 1.061.013 divulgue une étagère de stockage constituée d'un meuble comprenant un volume interne à l'intérieur duquel se déplace des étagères disposées horizontalement. La sélection d'une étagère s'effectue par un clavier de commande qui actionne des moyens de déplacement, ces moyens de déplacement générant une translation circulaire des étagères pour permettre l'acheminement de l'étagère sélectionnée au niveau d'une zone d'accès en façade du meuble.

Le document EP 0.254.088 divulgue un meuble présentant une conception semblable à celle du document EP 1.061.013, exception faite que les étagères comprennent plusieurs cellules du type tiroir agencées les unes à coté des autres.

Les dispositifs de stockage et d'acheminement selon ce type de conception présentent pour inconvénients d'être encombrants ; cet encombrement est notamment dû aux moyens de déplacement qui augmentent considérablement la profondeur du meuble pour permettre la réalisation du mouvement de translation circulaire des étagères. Par ailleurs, cette conception limite également le nombre d'étagères disposées à l'intérieur du volume du meuble.

Le document WO 97/37564 décrit un dispositif de stockage muni notamment d'un système de sécurité. Ce dispositif de stockage est conçu sous la forme d'une armoire mécanique comportant une pluralité de supports d'articles à stocker, déplaçable de manière sélective par un mécanisme d'entraînement vers une zone d'accès constituant une ouverture de chargement ou de déchargement. Le meuble comprend notamment deux colonnes latérales, chacune des colonnes étant munie d'une pluralité de supports d'articles, lesdits supports pouvant être déplacés transversalement pour être disposés sur un plateau mobile verticalement, ledit plateau étant commandé par des moyens de translation verticale.

Ce mode de conception présente pour inconvénients d'augmenter l'encombrement du meuble, et également de réduire la capacité de stockage du fait de la présence en partie centrale du plateau mobile qui se déplace verticalement sur toute la hauteur pour réceptionner les supports d'articles disposés dans les colonnes latérales afin de les acheminer dans une zone d'accès.

Le document WO 99/62377 décrit un meuble de stockage comprenant notamment deux étagères qui peuvent être intégrées dans le volume interne du meuble, lesdites étagères étant mobiles verticalement et horizontalement pour être manoeuvrées et acheminées hors du caisson ou volume interne du meuble. Les moyens de déplacement de ces étagères sont notamment constitués d'un tambour rotatif solidaire d'une sangle reliée audites étagères.

Ce mode de conception présente comme inconvénients d'augmenter l'encombrement du meuble, et de réduire le nombre d'étagères pouvant être aménagé dans le volume interne. Les mouvements d'une étagère consistent en une translation verticale pour la positionner devant la zone d'accès, puis en une translation horizontale pour la dégager, par rapport aux étagères, à l'extérieur du volume, hors de la zone d'accès.

Il est également connu les dispositifs de stockage et d'acheminement d'articles tels que ceux décrits dans les documents DE 20.2006.005038, US 7.168.905 et GB 2.078.651. Selon ces documents, le dispositif comprend un volume interne, des cellules de stockage, et des moyens de déplacement des cellules. Le volume interne est constitué d'au moins deux colonnes disposées les unes à coté des autres et/ou les unes derrières les autres, ces colonnes étant découpées en hauteur en au moins deux compartiments, au moins l'un des compartiments de l'une des colonnes communicant avec une zone d'accès. Les cellules de stockage sont mobiles et disposées en empilage dans les compartiments, à l'exception d'au moins l'un d'entre eux qui reste inoccupé. Les moyens de déplacement des cellules sont agencés pour gérer la translation de celles-ci au travers des compartiments en transitant par le compartiment inoccupé. Cela permet d'acheminer l'une desdites cellules, sélectionnée par un utilisateur, dans la zone d'accès. Ces moyens de déplacement comprennent un système de transfert agencé au niveau des compartiments supérieurs des colonnes pour translater les cellules alignées les unes à coté des autres ou les unes derrière les autres dans le compartiment supérieur. De même, ces moyens de déplacement comprennent un système élévateur agencé sous les colonnes pour translater vers le haut ou vers le bas les cellules empilées suivant l'une des colonnes lorsque le compartiment supérieur, respectivement le compartiment inférieur de ladite colonne est inoccupé. En outre, les moyens de déplacement comprennent un système de transfert agencé au niveau des compartiments inférieurs des colonnes pour translater les cellules alignées les unes à coté des autres ou les unes derrière les autres dans lesdits compartiments inférieurs.

L'objet de la présente invention est de mettre en oeuvre une alternative de conception de moyens de déplacement visant notamment à réduire l'encombrement du dispositif de stockage et d'acheminement d'articles. En outre, la conception des moyens de déplacement du dispositif objet de la présente invention permet avantageusement leur mise en oeuvre aisée lorsque le volume interne comprend plus de deux colonnes disposées les unes à coté des autres et/ou les unes derrière les autres.

A ce sujet, la présente invention porte sur un dispositif de stockage et d'acheminement des articles. Un tel dispositif est notamment utilisable en tant que mobilier de rangement d'articles à usage domestique. Le dispositif comprend un volume interne, des cellules de stockage et des moyens de déplacement des cellules.

Le volume interne est constitué d'au moins deux colonnes disposées les unes à coté des autres et/ou les unes derrière les autres, lesdites colonnes étant découpées en hauteur en au moins deux compartiments. Par ailleurs, au moins l'un des compartiments de l'une des colonnes communique avec une zone d'accès.

Les cellules de stockage sont mobiles et disposées en empilage dans des compartiments, à l'exception d'au moins l'un d'entre eux qui reste inoccupé.

Les moyens de déplacement des cellules sont agencés pour gérer la translation desdites cellules au travers des compartiments en transitant par le compartiment inoccupé. Cela permet d'acheminer l'une de ces cellules, sélectionnée par un utilisateur, dans la zone d'accès.

Ces moyens de déplacement comprennent au moins un premier système de transfert agencé au niveau des compartiments supérieurs des colonnes pour translater les cellules alignées les unes à coté des autres ou les unes derrière les autres dans lesdits compartiments supérieurs. En outre, les moyens de déplacement comprennent un système élévateur et un second système de transfert.

Le système élévateur consiste en une table élévatrice comprenant des platines mobiles agencées sous chacune des colonnes pour supporter et translater verticalement les cellules empilées dans lesdites colonnes. En outre, des moyens de motorisation sont agencés pour translater verticalement lesdites platines.

Le second système de transfert est agencé au niveau des compartiments inférieurs des colonnes. Celui-ci permet la translation des cellules alignées les unes à côtés des autres ou les unes derrières les autres dans lesdits compartiments inférieurs. En outre, le second système de transfert est agencé pour permettre l'encastrement des platines mobiles à l'intérieur de celui. Une telle conception permet avantageusement d'imbriquer le système élévateur et le second système de transfert en partie inférieure afin de limiter l'encombrement des moyens de déplacement.

Selon un mode de réalisation, le second système de transfert comprend une table à rouleaux agencée au niveau des compartiments inférieurs des colonnes pour translater les cellules alignées les unes à coté des autres ou les unes derrière les autres dans lesdits compartiments inférieurs. Ces rouleaux sont entraînés en rotation par des moyens de transmission et sont espacés les uns par rapport aux autres pour permettre le positionnement des platines du système élévateur entre lesdits rouleaux.

D'autres variantes de conception de ce second système de transfert sont envisageables telles que décrites ci-après.

De manière préférentielle, le premier système de transfert, agencé en partie supérieure, comprend au moins deux flasques entretoisés, au moins quatre roues, au moins deux chaînes et au moins deux entretoises. Les flasques sont entretoisés et disposés parallèlement sur la largeur ou sur la longueur du dispositif. Par ailleurs, ces flasques sont espacés l'un de l'autre pour permettre le passage des cellules entre lesdits flasques. Les quatre roues sont motorisées et synchronisées, celles-ci étant montées en liaison pivot aux extrémités des flasques. Les deux chaînes sont agencées chacune entre les deux roues disposées sur un même flasque, lesdites chaînes étant entraînées en rotation et synchronisées l'une par rapport à l'autre. Les deux entretoises ont leurs extrémités solidarisées sur les chaînes, l'entraînement desdites chaînes générant une translation circulaire des entretoises qui agissent sur les cellules en partie supérieure pour les déplacer en direction du compartiment inoccupé.

Ainsi, le volume interne du meuble est découpé en compartiments, dont au moins l'un d'entre eux communique avec la zone d'accès. Ces compartiments sont occupés par les cellules de stockage, à l'exception d'au moins l'un d'entre eux qui reste inoccupé. Ce compartiment inoccupé est variable et change lors du déplacement des cellules. Les moyens de déplacement des cellules sont agencés pour gérer la translation des cellules verticalement et horizontalement au travers des compartiments du volume interne, lesdites cellules transitant par le compartiment inoccupé lors de leur translation afin d'amener la cellule sélectionnée par l'utilisateur dans le compartiment communicant avec la zone d'accès.

Par ailleurs, les déplacements des cellules se limitent à des translations à l'intérieur du volume interne du dispositif, ce qui permet avantageusement d'agencer les moyens de déplacement autour du volume interne, la conception du système élévateur et des systèmes de transfert en partie inférieure et en partie supérieur, selon l'invention, limitant considérablement leur encombrement à l'intérieur du dispositif.

La présente invention sera mieux comprise à la lecture de la description qui va suivre et d'un mode préférentiel de réalisation du dispositif de stockage, qui s'appuie sur des figures, parmi lesquelles :
- la figure 1 présente une vue tridimensionnelle d'un mode de réalisation du dispositif de stockage et d'acheminement d'articles selon la présente invention ;
- la figure 2 présente un premier agencement du dispositif de stockage sous la forme d'un meuble à usage domestique aménagé en largeur ;
- la figure 3 présente un système de translation vertical constituant un premier élément des moyens de déplacement du dispositif selon l'invention ;
- les figures 4 et 5 présentent un système de translation horizontale constituant un second élément des moyens de déplacement notamment aménagé en partie inférieure du dispositif selon l'invention ;
- les figures 6 et 7 présentent un système de translation horizontale constituant un troisième élément des moyens de déplacement notamment agencés en partie supérieure du dispositif selon l'invention ;
- la figure 8 présente des moyens de blocage des cellules permettant le maintien de celles-ci pendant la manoeuvre des systèmes de translation vertical et horizontal ;
- la figure 9 schématise le déplacement des cellules pour un dispositif comprenant cinq cellules acheminées au travers de six compartiments répartis en deux colonnes ;
- la figure 10 représente un second agencement du dispositif de stockage sous la forme d'un meuble aménagé en profondeur ;
- la figure 11 représente un mode préférentiel de conception des cellules du dispositif selon l'invention ;
- la figure 12 représente une vue tridimensionnelle d'un système de dégagement des cellules selon la figure 11 agencé sur le dispositif selon l'invention pour sortir les cellules hors de la zone d'accès ;
- la figure 13 représente une vue de dessus d'une pièce du système de dégagement selon la figure 12, coopérant avec un élément agencé sur les cellules selon la figure 11.

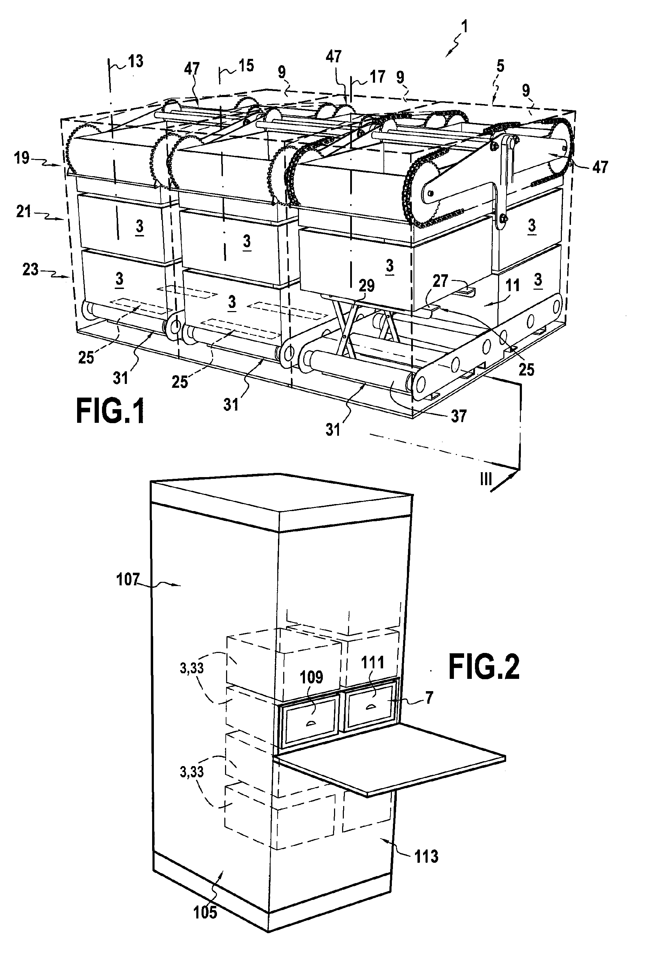

Tel que schématisé sur la figure 1, le dispositif 1 de stockage et d'acheminement vertical comprend au moins trois cellules de stockage 3. Ces cellules de stockage 3 sont par exemple des casiers de stockage à tiroir ouverts sur leur face supérieure pour permettre un accès rapide et facile aux articles stockés dans lesdits casiers. On pourra toutefois prévoir également des boîtiers ou casiers fermés munis d'une façade avant ouvrante, pouvant fermer ledit boîtier. De préférence, les cellules 3 seront de fine épaisseur et réalisées dans un matériau qui favorise son allègement. Ces cellules 3 sont mobiles à l'intérieur du dispositif 1 qui présente un volume interne 5 dans lequel sont disposées lesdites cellules 3.

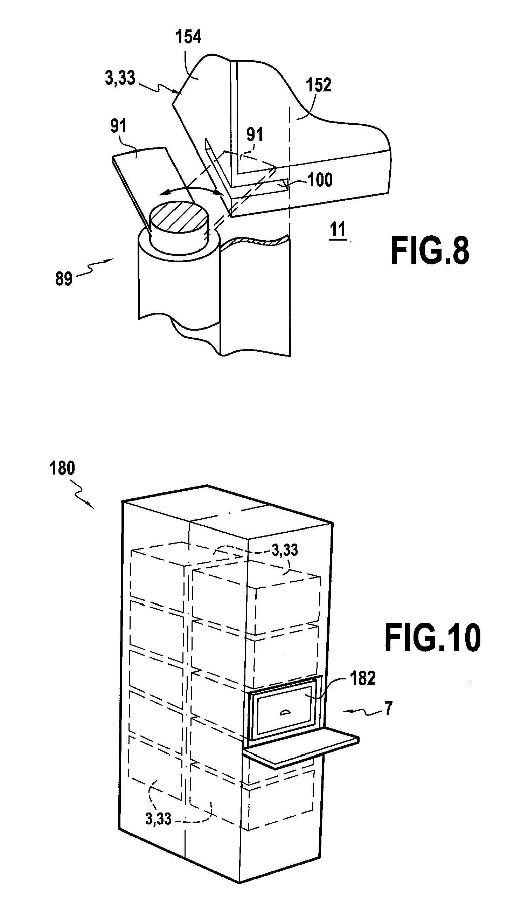

Le dispositif comprend une zone d'accès 7, telle que représentée sur la figure 2 et sur la figure 10, qui permet d'accéder à l'une des cellules 3 du dispositif. Ces cellules 3 sont acheminées dans la zone d'accès 7 par des moyens de déplacement.

Le volume interne 5 du dispositif de stockage 1, dans lequel sont disposées les cellules 3, est découpé en au moins quatre compartiments 9. Ces compartiments, schématisés en figure 1, sont de dimensions correspondantes à celles des cellules 3, l'un desdits compartiments communiquant avec la zone d'accès 7, la cellule 3 sélectionnée par l'utilisateur venant se positionner dans ledit compartiment 9 communiquant avec ladite zone d'accès 7, ladite cellule 3 pouvant alors être, par exemple, déplacée hors de la zone d'accès afin de disposer des articles stockés à l'intérieur de celle-ci.

Le nombre de compartiments 9 agencés sur le dispositif 1 est strictement supérieur au nombre des cellules 3 de manière à ce que l'ensemble des compartiments 9 soit occupé à l'exception d'au moins l'un 11 d'entre eux, la position du compartiment inoccupé 11 changeant au cours des déplacements des cellules 3, les moyens de déplacement permettant l'acheminement de la cellule sélectionnée dans la zone d'accès 7. Ces moyens de déplacement sont agencés pour gérer la translation desdites cellules 3 au travers des compartiments 9, ladite translation se faisant en transitant par le compartiment inoccupé 11 à l'intérieur du volume interne 5, la gestion de la translation des cellules 3 au travers du compartiment inoccupé 11 permettant d'amener ladite cellule sélectionnée dans le compartiment communiquant avec la zone d'accès 7.

Tel que schématisé sur la figure 1, le volume interne 5 du dispositif comprend au moins deux colonnes 13,15,17 disposées les unes à coté des autres suivant un plan transversal. Ces colonnes 13,15,17 peuvent également être disposées les unes derrière les autres suivant la profondeur du dispositif 1. Selon ces deux cas, les moyens de déplacement permettent respectivement la translation verticale et transversale des cellules 3, et la translation verticale et en profondeur des cellules 3.

Selon une autre conception, le volume interne 5 peut être composé de colonnes disposées à la fois les unes à coté des autres et les unes derrières les autres, dans quel cas les moyens de déplacement permettront une translation des cellules 3 verticalement, transversalement et en profondeur. Ces colonnes 13,15,17 sont découpées suivant la hauteur en au moins deux compartiments 19,21,23 tels que schématisés en figure 1, de manière à présenter au moins un compartiment inférieur 23 et un compartiment supérieur 19 et éventuellement des compartiments intermédiaires 23. Les cellules 3 de stockage sont empilées les unes au dessus des autres suivant chacune des colonnes 13,15,17, chaque colonne recevant autant de cellules que de compartiments dont elle dispose, à l'exception d'au moins une des colonnes qui dispose d'un compartiment inoccupé 11, ce compartiment inoccupé 11 variant au cours du déplacement des cellules, sa position changeant pour être localisée soit sur la même colonne soit sur une colonne différente mais à une même hauteur de compartiment.

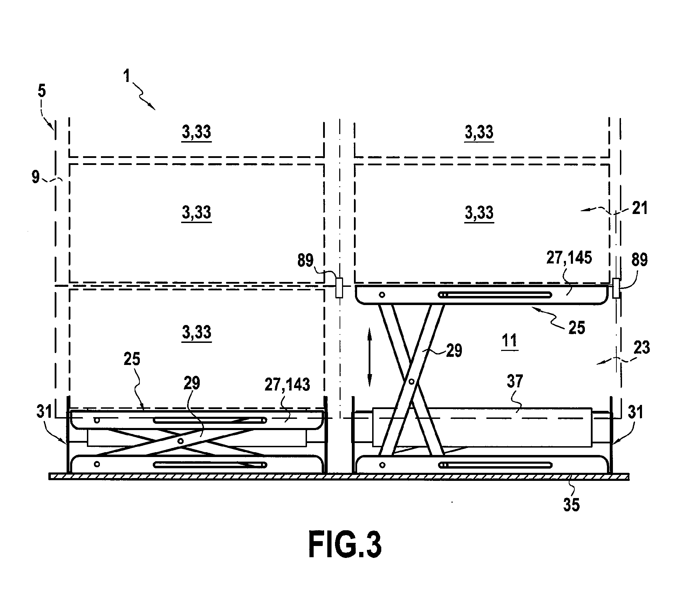

Tel que schématisé sur la figure 1 et représenté en figure 3, les moyens de déplacement comprennent au moins un système élévateur 25. Ce système élévateur 25 est agencé sous les colonnes 13,15,17, et disposé sous les cellules 3 empilées les unes au dessus des autres sur chacune des colonnes, ledit système 15 permettant de translater vers le haut les cellules 3 empilées suivant la colonne 17 lorsque le compartiment supérieur 11 est inoccupé et vers le bas lorsque le compartiment inférieur est inoccupé. La course de translation du système élévateur 25 est au moins égale, voire supérieure à la hauteur du compartiment inférieur 23, de manière à dégager complètement la cellule 3 disposée en bas de la colonne 13,15,16 au dessus de ce compartiment inférieur 23.

Tel que représenté en figure 3, le système élévateur 25 consiste en une table élévatrice. Cette table élévatrice est agencée au niveau de chacune des colonnes 13,15,17 et comprend pour cela des platines 27 disposées sous chacune des colonnes du volume interne 5, lesdites platines 27 étant mobiles et agencées pour supporter et translater vers le haut ou vers le bas les cellules 3 empilées les unes sur les autres au niveau de chaque colonne 13,15,17. Le système élévateur 25 comprend également des moyens de motorisation permettant la translation des platines vers le haut ou vers le bas sur ladite hauteur correspondant au moins à la hauteur des compartiments inférieurs 23. Selon une conception préférée, ces moyens de motorisation sont constitués d'un système de croisillons 29, ou encore d'un système vis-écrou actionné par un moteur agencé sous la platine 27 pour permettre son déplacement vertical.

Tel que représenté aux figures 3, 4 et 5, les moyens de déplacement comprennent au moins un système de transfert 31 agencé au niveau des compartiments inférieurs 23 des colonnes 13,15,17 pour permettre la translation des cellules 3 alignées les unes à coté des autres ou les unes derrière les autres dans lesdits compartiments inférieurs 23, notamment lorsque le dispositif présente un volume interne établi suivant deux dimensions, qui sont définies par la verticale et la transversale correspondant au meuble représenté en figure 2, ou par la verticale et la profondeur, correspondant au meuble représenté en figure 10. Ce système de transfert 31 des cellules disposées dans les compartiments inférieurs 23 est activé lorsque le compartiment inoccupé 11 se situe dans l'alignement des cellules inférieures 33 à déplacer.

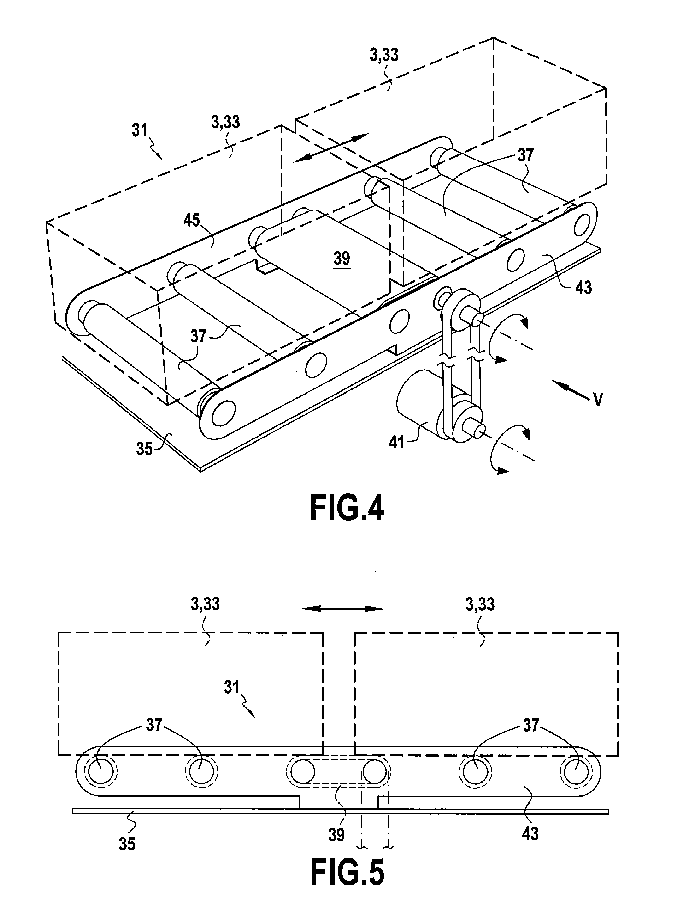

Tel que représenté aux figures 4 et 5, le système de transfert 31 agencé au niveau des compartiments inférieurs 23 des colonnes 13,15,17 comprend une table de transfert 35 à rouleaux 37, lesdits rouleaux étant entraînés par des moyens de transmission du type courroies de transmission ou encore chaîne de transmission, ladite courroie ou chaîne 39 étant actionnée au moyen d'une motorisation 41 et d'un dispositif d'engrenage avec la courroie ou la chaîne 39, cette motorisation 41 étant de préférence à double sens pour permettre l'inversion du sens de rotation des rouleaux 37 via les moyens de transmission, et déplacer ainsi dans un sens ou dans l'autre les cellules 33 disposées sur lesdits rouleaux 37 et alignées les unes à coté des autres ou les unes derrière les autres au niveau des compartiments inférieurs 23.

Ces rouleaux 37 d'entraînement sont espacés sur la table 35 de manière à permettre le positionnement des platines 27 du système élévateur 25 entre lesdits rouleaux 37 et en dessous de chacune des colonnes 13,15,17. Le système de transfert 31 comprend au moins deux flasques longitudinaux 43,45 espacés parallèlement l'un de l'autre d'une distance correspondant sensiblement aux dimensions des cellules 3,33, les rouleaux 37 étant montés en liaison pivot entre lesdits flasques 43,45. Cette conception a pour avantage de réduire l'encombrement du dispositif 1, notamment suivant la largeur ou la profondeur.

Selon une première variante de conception, le système de transfert agencé au niveau des compartiments inférieurs 23 des colonnes 13,15,17 comprend une table permettant le support et le transfert des cellules disposées dans lesdits compartiments inférieurs. Cette table est composée au moins de deux courroies motorisées et disposées parallèlement sur la largeur ou sur la longueur du dispositif 1. Les courroies sont espacées l'une de l'autre de manière à permettre l'encastrement des platines 27 entre celles-ci. En outre, leur écartement doit être limité de manière à permettre le support des cellules disposées dans les compartiments inférieurs. Ces courroies sont entraînées en rotation au moyen d'une motorisation, leur entraînement étant synchronisé afin d'assurer un transfert convenable des cellules. Par ailleurs, ces courroies peuvent être renforcées au moyen de rails pour éviter le fléchissement desdites courroies et assurer un support adapté des cellules.

Selon une seconde variante de conception du système de transfert agencé au niveau des compartiments inférieurs 23 des colonnes 13,15,17, celui comprend au moins deux flasques entretoisés, au moins quatre roues, au moins deux chaînes et au moins une paire de taquets. Cette conception est semblable à celle décrite ci-après pour le système de transfert agencé au niveau des compartiments supérieurs 19, à la différence que les flasques sont inversés et que les taquets sont remplacés par des entretoises.

Selon cette seconde variante, les flasques entretoisés sont disposés parallèlement sur la largeur ou sur la longueur du dispositif 1 et espacés l'un de l'autre pour permettre l'encastrement des platines 27 et le passage des cellules 3 supportées par lesdites platines et translatant entre lesdits flasques. On peut toutefois envisager l'ajout de rouleaux complémentaires supportant les cellules durant leur transfert dans les compartiments inférieurs, ce qui permettrait de soulager les platines. Dans ce cas, les rouleaux sont montés fous entre les deux flasques entretoisés et ils sont agencés avec un espacement permettant le passage des platines, de manière similaire au premier mode de réalisation décrit ci-dessus.

Les quatre roues sont motorisées et synchronisées. En outre, elles sont montées en liaison pivot aux extrémités des flasques entretoisés. Les chaînes sont agencées, chacune, entre les deux roues disposées sur un même flasque, lesdites chaînes étant entraînées en rotation et synchronisées pour assurer un transfert convenable des cellules. Ces chaînes reçoivent au moins une paire de taquets solidarisés en vis-à-vis sur lesdites chaînes. Ces taquets prennent appui sur les bords de l'une des cellules dans les compartiments inférieurs, l'entraînement des chaînes générant une translation circulaire des taquets pour translater lesdites cellules sur les platines ou sur les rouleaux.

Les moyens de déplacement comprennent également un système de transfert 47 agencé au niveau des compartiments supérieurs 19 des colonnes 13,15,17 pour translater les cellules 3 alignées les unes à coté des autres, ou les unes derrière les autres, dans les compartiments supérieurs 19 lorsque le compartiment inoccupé se situe suivant ledit alignement des cellules.

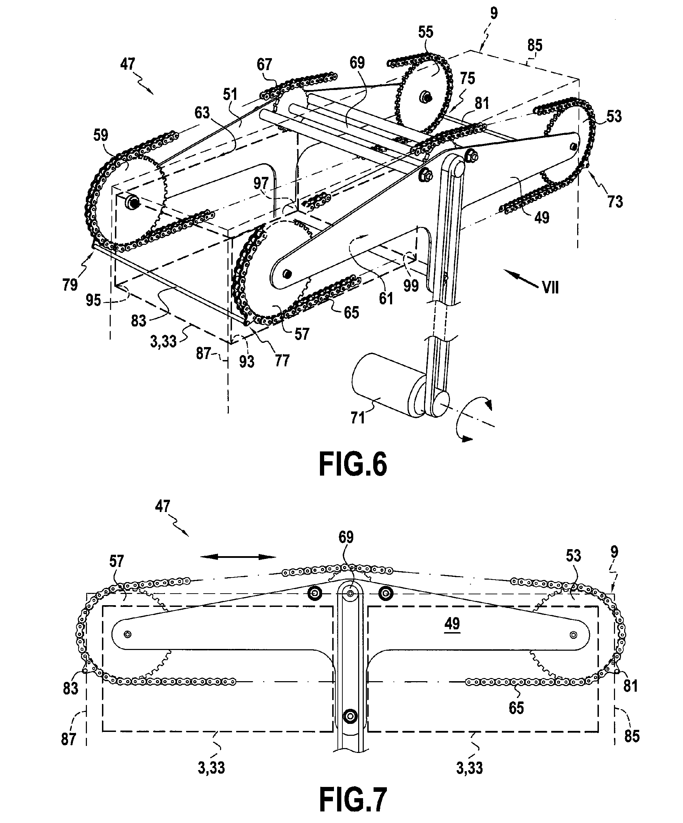

Tel que représenté sur les figures 6 et 7, ce système de transfert 47 agencé au niveau des compartiments supérieurs 19 des colonnes 13,15,17 comprend au moins deux flasques entretoisés 49,51. Ces flasques 49,51 sont disposés parallèlement l'un par rapport à l'autre sur la largeur ou sur la profondeur du dispositif 1, leur espacement étant sensiblement supérieur aux dimensions des cellules 3 pour permettre leur positionnement contre les flasques et le transfert des cellules 3 le long desdits flasques 49,51. Ces flasques reçoivent au moins quatre roues 53,55,57,59 motorisées et synchronisées l'une par rapport à l'autre. Ces roues 53,55,57,59 sont montées en liaison pivot aux extrémités des flasques 49,51 par exemple sur les cotés internes 61,63 desdits flasques, les roues disposées en vis à vis sur les flasques présentant un écartement sensiblement supérieur aux dimensions des cellules 3. Ces roues sont de préférence des roues dentées sur lesquelles engrènent au moins deux chaînes 65,67 telles que représentées sur les figures 6 et 7, de manière à les positionner suivant toute la longueur du dispositif 1, les chaînes 65,67 débordant au-delà des deux compartiments supérieurs 19 situés aux extrémités du volume 5. Les chaînes 65,67 sont entraînées en rotation au moyen d'un arbre d'entraînement 69 qui est motorisé, le moteur 71 étant de préférence à double sens de rotation de manière à permettre l'inversion du sens de rotation des chaînes. Par ailleurs, le moteur permet un entraînement synchronisé des deux chaînes 65,67 au moyen de l'arbre d'entraînement 69. Ces chaînes sont donc positionnées parallèlement l'une par rapport à l'autre. Elles reçoivent les extrémités 73,75,77,79 de deux entretoises 81,83 solidarisées entre les chaînes 65,67 de manière à être disposées parallèlement par rapport aux faces externes 85,87 des deux compartiments supérieurs 19 disposés aux extrémités du volume 5. Ces entretoises 81,83 sont fixées sur les chaînes 65,67 en présentant un écartement au moins égal à la largeur ou la profondeur du volume interne 5 délimité par les faces externes 85,87 desdits compartiments disposés aux extrémités. Ainsi, la rotation des chaînes 65,67 génèrent une translation circulaire des entretoises 85,87 qui en fonction du sens de rotation viennent en butée sur la face externe 85,87 de la cellule 3 disposée dans le compartiment supérieur 19 à l'une des extrémités, la translation de l'entretoise en butée permettant le déplacement de l'ensemble des cellules alignées, respectivement les unes à coté des autres ou les unes derrière les autres pour les décaler, respectivement, transversalement ou en profondeur dans les compartiments supérieurs.

Les moyens de déplacement comprennent également un système de maintien 89 en hauteur des cellules 3 empilées sur une colonne 13,15,17 lorsque celles-ci ont été transférées verticalement vers le haut au moyen du système élévateur 25. Ce système de maintien 89 est agencé au dessus des compartiments inférieurs 23 pour permettre le maintien en position des cellules 3 empilées et décalées vers le haut et en dehors de la zone du compartiment inférieur 23, et ensuite permettre la descente du système élévateur 25 pour dégager la platine 27 en dessous des rouleaux 37 du système de transfert 35 agencé au niveau des compartiments inférieurs 23 des colonnes, ledit dégagement de la platine 27 du système élévateur 25, permettant alors d'actionner la table à rouleaux 35 pour permettre l'acheminement d'une cellule 33 dans le compartiment inoccupé 11 situé au dessous des cellules 3 empilées et maintenues au moyen du système de maintien 89. Ce système de maintien 89 permet donc le maintien en position des cellules empilées soit après que celles-ci aient été translatées vers le haut et que la platine 27 ait été descendue, ledit maintien étant préservé tant que le compartiment inférieur 23 de la colonne 13,15,17 correspondante reste inoccupé, soit avant que la cellule située dans le compartiment inférieur soit déplacée et que ledit compartiment inférieur devienne le compartiment inoccupé 11, ledit maintien étant assuré tant que la platine 27 ne supporte pas les cellules empilées et maintenues par ledit système de maintien.

Une fois le compartiment 23 occupé par une cellule 33, le système de transfert vertical 25 est actionné de manière à élever ladite cellule 33 pour venir la positionner en appui sous la pile de cellules maintenues décalées, le système de maintien 89 pouvant alors être dégagé une fois ladite pile supportée par la cellule inférieure et élevée au moyen du système de transfert 25. Lorsque le système de maintien 89 est dégagé, ledit système de transfert 25 peut alors redescendre pour poser les cellules 3 empilées sur la table à rouleaux 35.

Par ailleurs, le système de maintien 89 permet le maintien en position de toutes les cellules disposées au dessus des cellules inférieures 33 lorsque lesdites cellules inférieures 33 doivent être déplacées au moyen du système de transfert longitudinal inférieur 31. Ce maintien assure un décalage des cellules situées au dessus des cellules inférieures 33, ce qui évite tout frottement entre les cellules au cours de leur transfert et assure le bon fonctionnement du dispositif.

Selon un mode préférentiel, le système de maintien comprend au moins quatre taquets 91 escamotables agencés au dessus du compartiment inférieur 23 de chaque colonne 13,15,17, ces taquets 91 sont agencés pour permettre le support de la cellule 33 au niveau de ces quatre extrémités 93,95,97,99 qui sont disposées en dehors de la zone de support sur laquelle vient en appui la platine 207 du système de transfert 25. Ces taquets 91 sont de préférence montés rotatifs, la rotation selon un premier sens permettant leur positionnement sous la cellule inférieure de la pile, tandis que la rotation suivant un autre sens permet l'escamotage desdits taquets pour permettre la redescente de ces cellules empilées.

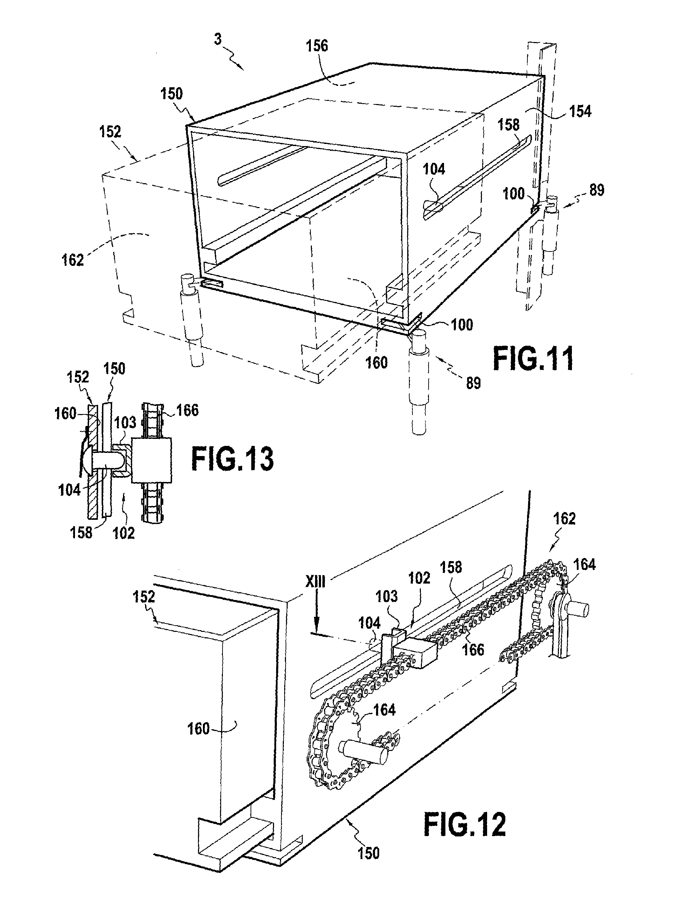

Selon un mode préférentiel de conception, représenté sur les figures 8 et 11, les cellules comprennent au niveau de leur quatre coins, des encoches 100, de préférence de forme circulaire, d'une épaisseur supérieure à celle des taquets 91 escamotables. Ainsi, les encoches 100 permettent la rotation des taquets 91 et leur positionnement à l'intérieur desdites encoches, de manière à prendre appui sur la cellule.

Selon un mode préférentiel, les moyens de déplacement comprennent un système de dégagement permettant le décalage de la cellule sélectionnée en dehors de la zone d'accès 7 lorsque celle-ci se situe dans le compartiment correspondant avec ladite zone d'accès. Ce système de dégagement est notamment agencé pour translater la cellule au travers de ladite zone afin d'accéder facilement aux articles stockés dans ladite cellule à l'extérieur du dispositif.

Tel que représenté sur les figures 2 et 10, la zone d'accès 7 est, de manière préférentielle et non limitative, située à mi-hauteur sur le meuble équipé du dispositif 1 selon l'invention, de manière à ce que la cellule 3 soit facilement accessible par l'utilisateur lorsqu'elle est extraite du meuble. Cette zone d'accès 7 est de préférence agencée au niveau d'un compartiment intermédiaire 21, ce qui favorise la mise en oeuvre d'un système de dégagement 101 et l'appréhension desdites cellules 3, tel que décrit ci-dessous.

Le système de dégagement 101 est, selon un mode préférentiel représenté en figure 12, constitué de deux pièces d'entraînement 102 de la cellule sélectionnée, lesdites pièces 102 étant agencées sur les cotés latéraux du compartiment intermédiaire 21 correspondant avec la zone d'accès 7. Cette pièce d'entraînement 102 est constituée par une patte 103 en forme de U, représentée sur la figure 13, lesdites pattes 103 recevant chacune une protubérance 104 agencée sur les cotés de la cellule 3. Pour cela, la cellule 3 est constituée, telle que représentée en figure 11, de deux éléments, à savoir un casier 150 à l'intérieur duquel coulisse un tiroir 152. Le casier comprend sur ses cotés latéraux 154,156 une lumière longitudinale 158, à l'intérieur de laquelle coulisse ladite protubérance 104 qui est agencée sur les cotés latéraux 160,162 du tiroir 152. Le déplacement des pattes en U 103 suivant le sens des lumières 158 entraîne donc les protubérances 104, ce qui translate le tiroir 152 par rapport au casier 150 pour permettre l'accès à l'intérieur dudit tiroir 152 renfermant les articles. Le casier 150 dispose des encoches 100 agencées sur ses quatre coins inférieurs.

Le système de dégagement comprend des moyens d'entraînement 162, représentés en figure 12, permettant la translation des deux pièces d'entraînement 102 suivant les deux sens correspondant à la lumière 158 permettant de sortir le tiroir 152 du casier 150 ou de le rentrer à l'intérieur de celui-ci.

Ces moyens d'entraînement 162 sont de préférence constitués d'une motorisation 164 qui entraîne simultanément deux chaînes 166 sur lesquelles sont solidarisés les deux pièces d'entraînement 102. Il est toutefois possible de prévoir un dispositif à vis sans fin agissant sur les pièces d'entraînement 102.

Les moyens de déplacement comprennent un automate programmable qui permet de gérer l'activation de chacun des organes 25,31,47,91 des systèmes de transfert afin d'assurer le déplacement des cellules empilées les unes sur les autres, ou alignées les unes à coté des autres ou les unes derrière les autres, en tenant compte de la position du compartiment inoccupé 11 à l'intérieur du volume interne 5. Cet automate gère également le système de dégagement 101 de la cellule 3 sélectionnée.

Pour cela, les moyens de déplacement comprennent des capteurs qui permettent de contrôler la position des cellules 3 dans les compartiments 9 et de commander la translation de ces cellules en fonction de la position du compartiment inoccupé 11 dans le volume 5. Ces capteurs de position permettront également de contrôler la position du compartiment sélectionné et celle du compartiment inoccupé, et de transmettre l'information à l'automate programmable, ledit automate programmable étant notamment équipé de moyens de gestion des cellules pour déterminer l'acheminement le plus rapide de la cellule sélectionnée par un jeu de transfert des cellules, verticalement, transversalement et/ou longitudinalement, en transitant par le compartiment inoccupé. Le dispositif comprend également des capteurs permettant de contrôler la position rentrée ou sortie du tiroir 152 par rapport au casier 150 de la cellule sélectionnée.

De manière préférentielle, le dispositif comprend un système de sélection des cellules, par exemple un clavier de commande, un dispositif de reconnaissance vocale ou un ordinateur, ledit système étant interconnecté à l'automate programmable qui gère l'acheminement de la cellule sélectionnée vers la zone d'accès, telle que choisie au moyen dudit système de sélection. Ce système de sélection sera, par exemple, disposé à l'extérieur du meuble 105 qui intègre le dispositif 1 selon la présente invention. Le système de sélection pourra également être à commande vocale, en particulier lorsque le dispositif 1 est mis en oeuvre chez des personnes handicapées.

La figure 2 schématise un mode de réalisation du dispositif de stockage d'acheminement d'articles qui se présente sous la forme d'un meuble de rangement 105, notamment à usage domestique. Le dispositif comprend de préférence un habillage externe constituant le châssis 107 du meuble et présente une zone d'accès 7 constituée par deux tiroirs 109,111 agencés à mi hauteur du meuble 105 sur la face avant 113, l'extraction des tiroirs 109,111 étant possible lors de l'activation du système de dégagement 101 de la cellule tel que décrit ci-dessus.

Selon une variante de conception, représentée en figure 10, le dispositif 1 se présente sous la forme d'un meuble 180 agencé en profondeur, et non transversalement comme sur la figure 2, le meuble 180 comprend donc une zone d'accès 7 constituée par un tiroir 182 disposé à mi-hauteur correspondant à la position d'un compartiment intermédiaire 21. Les moyens de déplacement sont toutefois similaires pour le meuble 105, représenté en figure 2, et le meuble 180, représenté en figure 10.

Selon ces deux conceptions de meuble 105,180, le dispositif comprend donc un système de transfert vertical 25 composé de deux platines 143,145, tel que représenté sur la figure 3, un système de transfert 31 transversal, ou en profondeur, agencé au niveau des compartiments inférieurs tel que celui représenté aux figures 4 et 5 et un système de transfert 47 transversal, ou en profondeur, agencé au niveau des compartiments supérieurs tel que celui représenté aux figures 6 et 7.

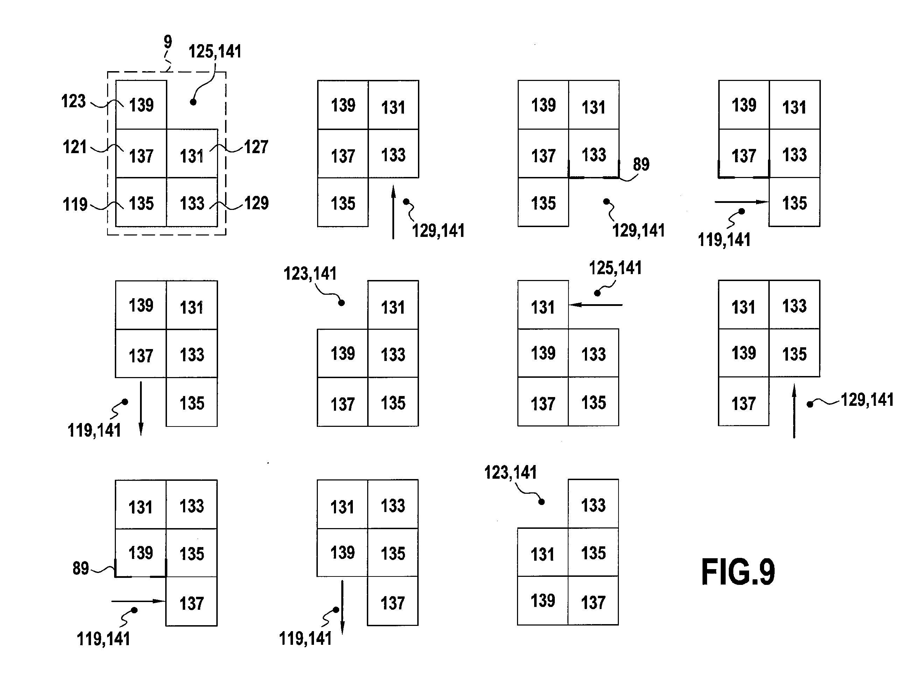

La figure 9 schématise différentes étapes d'activation des différents systèmes composant les moyens de déplacement, en fonction de la position des cellules, pour un dispositif comprenant un volume interne découpé en six compartiments constituant deux colonnes 115,117 de trois compartiments 119, 121,123,125,127,129, disposés l'une à coté de l'autre. Ces colonnes reçoivent cinq cellules 131,133,135,137,139, de manière à présenter en permanence un compartiment inoccupé 141 qui varie selon la position des cellules. Ainsi, pour aboutir d'une position de la cellule 139 disposée dans le compartiment 123 en haut et à gauche à une position de la cellule 139 disposée dans le compartiment 119 en bas et à gauche, on procède aux étapes suivantes :
- on active la platine 145 positionnée sur la droite de manière à élever les cellules 131 et 133 au dessus du compartiment inférieur 129 ;
- on actionne les taquets 91 pour assurer le maintien en position des cellules 131 et 133 ;
- on descend ladite platine 145 sous le compartiment inférieur 129 ;
- on active la platine 143 sur la gauche de manière à élever légèrement les cellules 135,137,139 ;
- on active les taquets 91 pour assurer le maintien des cellules 137 et 139 ;
- on descend la platine 143 permettant la descente de la cellule 135 et son décalage par rapport aux cellules 137,139 ;
- on active le système de transfert transversal 31 agencé au niveau des compartiments inférieurs pour décaler la cellule 135 vers la droite tout en assurant le maintien des compartiments 137 et 139 au moyen des taquets 91 ;
- on élève la platine 145 de gauche pour la disposer sous la cellule 135 et assurer le support des cellules 131 et 133 empilées ;
- on désactive les taquets 91 de gauche pour les dégager de la cellule 133, les cellules 131 et 133 étant supportées par la cellule 135 et par la platine de gauche 145 qui peut alors descendre pour poser les cellules 131,133,135 empilées ;
- on monte la platine 143 pour la positionner sous la cellule 137 et supporter les cellules 137 et 139 ;
- on désactive les taquets 91 pour permettre la descente de la platine 143 qui descend les cellules 137 et 139 ;
- on active le système de transfert 47 transversal, ou en profondeur, agencé au niveau des compartiments supérieurs pour décaler la cellule 131 vers la gauche dans le compartiment 123 qui est inoccupé ;
- on monte la platine de droite 145 pour élever les cellules 133 et 135 et on positionne les taquets 91 sous ladite cellule 135 afin d'assurer le maintien desdites cellules 133 et 135 empilées pour ensuite autoriser la descente de la platine de droite 145 ;
- on monte la platine de gauche 143 pour élever les cellules 139,139,131 permettant d'activer les taquets de gauche ;
- on active les taquets de gauche pour assurer le maintien des cellules 139 et 131 empilées ;
- on descend la platine de gauche 143 pour décaler la cellule 137 par rapport aux cellules 139 et 131 ;
- on décale vers la droite la cellule 137 au moyen du système de transfert 31 transversal, ou en profondeur, agencé au niveau des compartiments inférieurs ;
- on active la platine de gauche 143 pour la positionner sous la cellule 139 et assurer le support des cellules 139 et 131 empilées ;
- on dégage les taquets 91 de support des cellules 139 et 131 puis on active la platine pour descendre lesdites cellules 139 et 131 ; la cellule 139 se trouvant alors dans la zone d'accès.

Ces différentes étapes décrites ci-dessus ne sont qu'un exemple de réalisation. On peut envisager éventuellement d'autres cheminements des cellules au travers du compartiment inoccupé 141 en procédant de manière identique et en tenant compte de l'ordre d'activation des différents systèmes des moyens de déplacement. Il convient toutefois de s'assurer du maintien des cellules notamment au moyen des taquets 91 et du positionnement des platines 143,145 sous la cellule maintenue par lesdits taquets 91 afin d'éviter toute chute des cellules lorsque le compartiment inoccupé 141 se situe parmi les compartiments inférieurs 119,129. On peut, par ailleurs, réaliser plusieurs étapes simultanément, notamment en ce qui concerne la commande des platines 143,145 et des taquets 91.

De manière préférentielle, l'automate permettra le calcul et la détermination du chemin le plus court pour amener la cellule sélectionnée sur le système de sélection, au niveau de la zone d'accès 7.

On peut également envisager l'utilisation d'un système de transfert 31 agencé au niveau des compartiments inférieurs qui présentent une conception identique à celui du système de transfert 47 agencé au niveau des compartiments supérieurs. Dans ce cas, il convient d'inverser le système de manière à dégager les entretoises 81,83 faisant butées sur les cellules vers le bas, et non vers le haut tel que mis en oeuvre pour le système de transfert agencé au niveau des compartiments supérieurs. Il convient également de prévoir des cornières sur lesquelles glissent les cellules 3 étant donné qu'il n'y a plus de rouleaux pour assurer le support desdites cellules 3.

## Revendications

1. Dispositif (1) de stockage et d'acheminement d'articles, notamment utilisable en tant que mobilier de rangement d'articles à usage domestique, comprenant :
a) un volume interne (5) constitué d'au moins deux colonnes (13, 15, 17) disposées les unes à côtés des autres et/ou les unes derrière les autres, lesdites colonnes étant découpées en hauteur en au moins deux compartiments (19, 21, 23), au moins l'un des compartiments de l'une des colonnes communiquant avec une zone d'accès (7),
b) des cellules de stockage (3) mobiles et disposées en empilage dans lesdits compartiments (19, 21, 23), à l'exception d'au moins l'un d'entre eux qui reste inoccupé,
c) et des moyens de déplacement des cellules (3) agencés pour gérer la translation des cellules au travers des compartiments en transitant par le compartiment inoccupé (11) afin d'acheminer l'une desdites cellules, sélectionnée par un utilisateur, dans ladite zone d'accès, les moyens de déplacement comprenant au moins un premier système de transfert (47) agencé au niveau des compartiments supérieurs (19) des colonnes (13, 15, 17) pour translater les cellules (3) alignées les unes à côté des autres ou les unes derrière les autres dans lesdits compartiments supérieurs,
**caractérisé en ce que** les moyens de déplacement comprennent en outre :
- un système élévateur consistant en une table élévatrice comprenant des platines mobiles (27) agencées sous chacune des colonnes (13, 15, 17) pour supporter et translater verticalement les cellules empilées dans lesdites colonnes, des moyens de motorisation (29) étant agencés pour translater verticalement lesdites platines,
- un second système de transfert agencé au niveau des compartiments inférieurs (23) des colonnes (13, 15, 17) pour translater les cellules alignées les unes à côtés des autres ou les unes derrières les autres dans lesdits compartiments inférieurs, les platines mobiles (27) étant encastrées à l'intérieur dudit second système de transfert.

2. Dispositif (1) selon la revendication 1, **caractérisé en ce que** les moyens de motorisation des platines (27) sont constitués d'un système de croisillon (29) actionné par un moteur.

3. Dispositif (1) selon la revendication 1, **caractérisé en ce que** les moyens de motorisation des platines sont constitués par un système vis écrou actionné par un moteur.

4. Dispositif (1) selon l'une des revendications 1 à 3, **caractérisé en ce que** le second système de transfert comprend une table à rouleaux (35) supportant les cellules alignées les unes à côtés des autres ou les unes derrières les autres dans lesdits compartiments inférieurs, les rouleaux étant entraînés en rotation par des moyens de transmission et étant espacés pour permettre le positionnement des platines (27) entre les rouleaux (37).

5. Dispositif (1) selon la revendication 4, **caractérisé en ce que** les moyens de transmission entraînant les rouleaux (35) sont constitués d'une courroie de transmission (39) ou d'une chaîne de transmission actionnée au moyen d'une motorisation (41) ayant au moins un sens de rotation.

6. Dispositif (1) selon l'une des revendications 1 à 3, **caractérisé en ce que** le second système de transfert comprend une table composée au moins de deux courroies motorisées et disposées parallèlement sur la largeur ou sur la longueur du dispositif (1), lesdites courroies étant espacées l'une de l'autre de manière à permettre l'encastrement des platines (27) entre celles-ci, et à permettre le support des cellules disposées dans les compartiments inférieurs, l'entraînement synchronisé des courroies permettant le transfert desdites cellules.

7. Dispositif (1) selon l'une des revendications 1 à 3, **caractérisé en ce que** le second système de transfert comprend :
- au moins deux flasques entretoisés, disposés parallèlement sur la largeur ou sur la longueur du dispositif (1) et espacés l'un de l'autre pour permettre l'encastrement des platines (27) et le passage des cellules (3) ;
- au moins quatre roues motorisées et synchronisées, lesdites roues étant montées en liaison pivot aux extrémités des flasques ;
- au moins deux chaînes agencées chacune entre les deux roues disposées sur un même flasque, les chaînes étant entraînées en rotation et synchronisées ;
- et au moins une paire de taquets solidarisés en vis-à-vis sur les chaînes et prenant appui sur les bords de l'une des cellules, l'entraînement des chaînes générant une translation circulaire des taquets pour translater lesdites cellules sur les platines.

8. Dispositif (1) selon l'une des revendications 1 à 7, **caractérisé en ce que** le premier système de transfert (47) comprend :
- au moins deux flasques (49, 51) entretoisés, disposés parallèlement sur la largeur ou sur la longueur du dispositif (1) et espacés l'un de l'autre pour permettre le passage des cellules (3) ;
- au moins quatre roues (53, 55, 57, 59) motorisées et synchronisées, lesdites roues étant montées en liaison pivot aux extrémités des flasques ;
- au moins deux chaînes (65, 67) agencées chacune entre les deux roues disposées sur un même flasque, les chaînes étant entraînées en rotation et synchronisées ;
- et au moins deux entretoises (81, 83) dont les extrémités (73, 75, 77, 79) sont solidarisées sur les chaînes, l'entraînement des chaînes générant une translation circulaire des entretoises.

9. Dispositif (1) selon l'une des revendications 1 à 8, **caractérisé en ce que** les moyens de déplacement comprennent un système de maintien (91) en hauteur des cellules (3) empilées sur une colonne (13, 15, 17), ledit système de maintien étant agencé au dessus du compartiment inférieur (23) pour permettre la décente de la platine (27) en maintenant en position les cellules empilées tant que le compartiment inférieur (23) de ladite colonne reste inoccupé.

10. Dispositif (1) selon la revendication 9, **caractérisé en ce que** le système de maintien en hauteur comprend au moins quatre taquets (91) escamotables agencés au dessus du compartiment inférieur (23) de chaque colonne (13, 15, 17), les taquets pouvant être soit positionnés sous les cellules (3) empilées pour permettre leur support et leur maintien en position décalée au dessus du compartiment inférieur (23) de la colonne, soit escamotés pour permettre la descente desdites cellules empilées.

11. Dispositif (1) selon l'une des revendications 1 à 10, **caractérisé en ce que** les moyens de déplacement comprennent un système de dégagement (101) de la cellule (3) sélectionnée lorsque celle-ci se situe devant la zone d'accès (7), ledit système de dégagement étant agencé pour translater ladite cellule au travers ladite zone d'accès et pour accéder hors du dispositif (1) aux articles stockés dans cette cellule.

12. Dispositif (1) selon la revendication 11, **caractérisé en ce que** le système de dégagement (101) se compose de deux pièces d'entraînement (102) de la cellule sélectionnée et de moyens d'entraînement (162) desdites pièces (102).

13. Dispositif (1) selon la revendication 12, **caractérisé en ce que** les cellules (3) sont constituées d'un casier (150) à l'intérieur duquel coulisse un tiroir (152), lesdits casiers (150) disposant de lumières longitudinales (158) à l'intérieur desquelles coulissent des protubérances (104) agencées sur les tiroirs (152).

14. Dispositif (1) selon l'une des revendications précédentes, **caractérisé en ce que** les moyens de déplacement comprennent un automate programmable et des capteurs permettant de contrôler la position des cellules (3) dans les compartiments (9) et de commander les translations desdites cellules en tenant compte du compartiment inoccupé (11).

15. Dispositif (1) selon la revendication 14, **caractérisé en ce qu'**il comprend un système de sélection de la cellule (3) à acheminer dans la zone d'accès (7), ledit système de sélection étant interconnecté à l'automate programmable.
